# EUROPEAN PATENT APPLICATION

(11) **EP 4 311 170 A1**
(43) Date of publication of application: **24.01.2024**
(21) Application number: 22771754.3
(22) Date of filing: 16.03.2022
(51) Int. Cl.: H04L 12/28, H04L 67/51, H04L 67/12, G06Q 10/08, G16Y 20/20

(54) **DEVICE FOR PROVIDING IOT SERVICE AND METHOD THEREFOR**

(30) Priority: 16.03.2021 KR 20210034140
(71) Applicant: Samsung Electronics Co., Ltd., Suwon-si, Gyeonggi-do 16677 (KR)
(72) Inventor: PARK, Jihwa, Suwon-si Gyeonggi-do 16677 (KR); KIM, Jonghwan, Suwon-si Gyeonggi-do 16677 (KR)
(74) Representative: HGF
(86) International application number: PCT/KR2022/003663
(87) International publication number: WO 2022/197088

(57) **Abstract**

Disclosed are a method for providing an Internet of Things (IoT) service and an electronic device therefor. The electronic device may include a communication module, a display, at least one processor, and a memory. The at least one processor may receive a first message including purchase information of an external electronic device from an IoT server, display information regarding the external electronic device on the display in response to receiving the first message, receive a second message indicating completion of delivery of the external electronic device from the IoT server, and display a user interface for registering the external electronic device on the display in response to receiving the second message. In addition thereto, various other embodiments understood through the disclosure are also possible.

## Description

### [Technical Field]

Various embodiments of the disclosure relate to a technique for guiding installation and registration of an Internet of Things (IoT) device to provide an IoT service in an electronic device.

### [Background Art]

Internet of Things (hereinafter, IoT) refers to a technology which connects communicable things through a network to enable communication between an object and another object or between an object and a person anytime, anywhere. With the release of various IoT devices (e.g., home appliances, equipment, or sensors) having communication functions along with the recent development of the IoT technology, the IoT devices are implemented such that interworking with mobile electronic devices are possible in spaces such as homes, offices, and workplaces. Therefore, fields of utilizing the IoT technology are being gradually diversified. For example, the IoT technology may be used in various fields such as smart home, smart home appliance control, intelligent building, automobile, or healthcare.

A procedure of registering information of the IoT device to an IoT server has to be performed in order to provide the IoT service. In general, the IoT device may be registered to the IoT server by a user's trigger action (e.g., manipulation through applications or voice utterance) input through a mobile electronic device or a speaker device. When the user does not take the trigger action of the IoT device, the IoT device is not registered, which may cause a decrease in a connection rate of the IoT device.

### [Disclosure of Invention]

### [Technical Problem]

Although a supply rate of the loT device is increasing due to the recent growth of an IoT market, users may still experience difficulties in the process of connecting and registering to the IoT server in order to receive services after purchasing the IoT device. For example, there is a limit in that, if the user does not recognize the presence of the IoT device or the procedure of registering the IoT device, the IoT service cannot be provided because the user's trigger action required to register the loT device is not performed.

Accordingly, in various embodiments of the disclosure, a user interface for registering the loT device to the IoT service is provided when the delivery of the loT device is complete, so as to guide the registration of the IoT device and increase the utilization of the IoT service. In addition, various embodiments may be provided to guide even a user who does not use an IoT service application to easily use the IoT device through interworking with a message application actually used by the user.

Technical problems to be achieved in the disclosure are not limited to the technical problems mentioned above, and other technical problems not mentioned herein can be clearly understood by those skilled in the art to which the disclosure pertains from the following descriptions.

### [Solution to Problem]

An electronic device according to an embodiment of the disclosure may include a communication module, a display, at least one processor operatively coupled to the communication module and the display, and a memory operatively coupled to the at least one processor. The memory may store instructions, when executed, causing the at least one processor to receive a first message including purchase information of an external electronic device from an Internet of Things (IoT) server via the communication module, display information regarding the external electronic device on the display in response to receiving the first message, receive a second message including delivery information of the external electronic device from the IoT server via the communication module, and display a first user interface for guiding registration of the external electronic device on the display, in response to receiving the second message.

An electronic device according to an embodiment of the disclosure may include a communication module, a sound output module, at least one processor operatively coupled to the communication module and the sound output module, and a memory operatively coupled to the at least one processor. The memory may store instructions, when executed, causing the at least one processor to receive a message indicating delivery completion of an external electronic device from an IoT server via the communication module, search for the external electronic device in response to receiving the message, output a first voice signal for guiding installation of the found external electronic device via the sound output module, and perform a registration procedure for the external electronic device, upon receiving a user input responding to the first voice signal.

A method of operating an electronic device according to an embodiment of the disclosure may include receiving a first message including purchase information of an external electronic device from an IoT server, displaying information regarding the external electronic device on a display in response to receiving the first message, receiving a second message including delivery information of the external electronic device from the IoT server, and displaying a first user interface for guiding registration of the external electronic device on the display, in response to receiving the second message.

### [Advantageous Effects of Invention]

According to various embodiments of the disclosure, it is possible to increase a registration rate of an Internet of Things (IoT) device by simplifying a registration procedure of the IoT device, which may be felt complicated and difficult by a user. In addition, registration of the IoT device may be guided even if the user does not take a specific action, and an unregistered device is periodically scanned to guide the registration, thereby improving user satisfaction for an IoT service.

In addition thereto, various effects which are directly or indirectly understood through the disclosure may be provided.

### [Brief Description of Drawings]

FIG. 1 is a block diagram of an electronic device in a network environment according to an embodiment;
FIG. 2 is a conceptual diagram illustrating a method in which an electronic device obtains purchase information or delivery information of an external electronic device according to an embodiment;
FIG. 3 is a block diagram illustrating a structure of an electronic device according to an embodiment;
FIG. 4 illustrates a flowchart in which an electronic device provides a user interface for registering an external electronic device according to an embodiment;
FIG. 5A and FIG. 5B illustrate a method of providing information on an external electronic device, based on purchase information or delivery information of the external electronic device, according to an embodiment
FIG. 6 illustrates a flowchart of searching for an unregistered device and registering the unregistered device to an IoT server, according to an embodiment;
FIG. 7 illustrates a flowchart for providing information by using a virtual card created in correspondence with an external electronic device, according to an embodiment;
FIG. 8 illustrates a method of providing information on an external electronic device by using a virtual card when a purchase related message is received, according to an embodiment;
FIG. 9 illustrates a method of providing information on an external electronic device by using a virtual card when a delivery related message is received, according to an embodiment;
FIG. 10A and FIG. 10B illustrate flowchart for performing a procedure of registering an external electronic device by using a speaker device, according to an embodiment;
FIG. 11 illustrates a method of transferring an ownership of an external electronic device to another user, according to an embodiment;
FIG. 12 illustrates a flowchart for transferring an ownership of an external electronic device to an electronic device of another user, according to an embodiment;
FIG. 13 is a flowchart illustrating a method of operating an electronic device according to an embodiment;
FIG. 14 illustrates a method of guiding automatic registration of an external electronic device depending on whether an IoT service app is installed, according to an embodiment;
FIG. 15A, FIG. 15B, and FIG. 15C illustrate a method of providing information related to an external electronic device by an electronic device, according to an embodiment;

With regard to the description of the drawings, the same or similar reference numerals may be used to refer to the same or similar elements.

### [Mode for Carrying out the Invention]

Hereinafter, various embodiments of the disclosure are described with reference to the accompanying drawings. However, it should be appreciated that this is not intended to limit the technological features set forth herein to particular embodiments and include various modifications, equivalents, and/or alternatives for an embodiment of the disclosure.

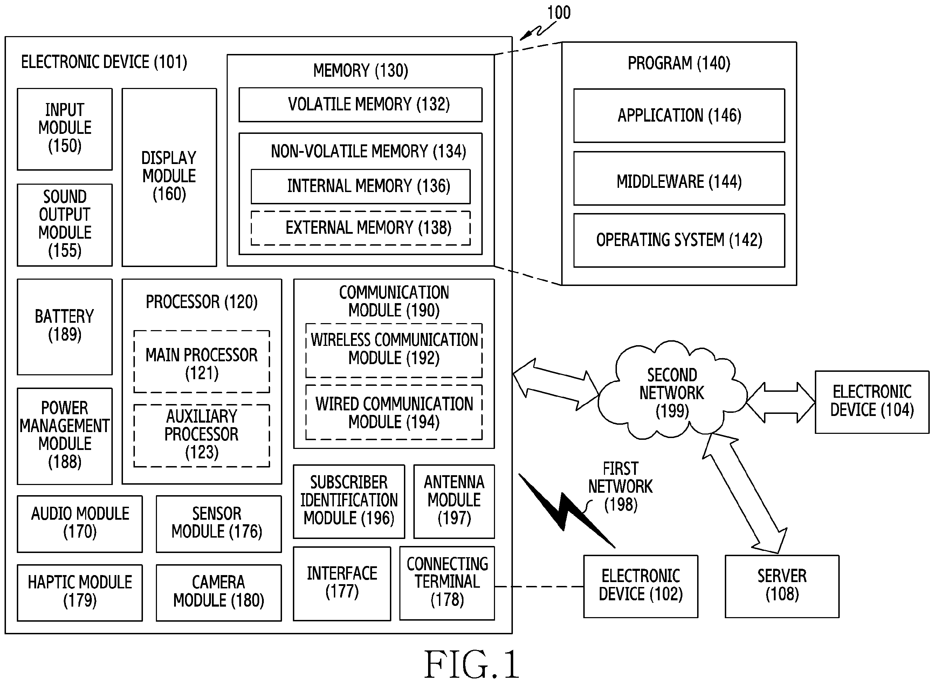

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semisupervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multipleoutput (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

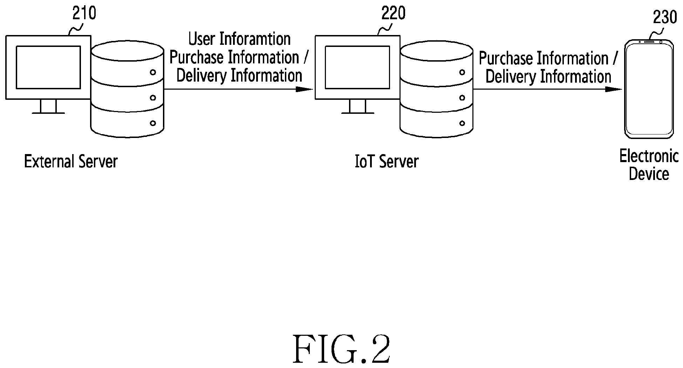

FIG. 2 is a conceptual diagram illustrating a method in which an electronic device obtains purchase information or delivery information of an external electronic device according to an embodiment.

In FIG. 2, an electronic device 230 may obtain the purchase information or delivery information of the external electronic device purchased by a user.

In an embodiment, when a purchase contract of the external electronic device is complete, an external server 210 may obtain user information and purchase information of the external electronic device from a vendor (e.g., an offline store or an online purchase site). The external electronic device may be an IoT device (e.g., home appliance, equipment, or sensor) having a communication function. The purchase information may include a model name or device information of the external electronic device. Since a manufacturing number (e.g., a serial number) of the external electronic device to be delivered to the user is not specified at a time when the purchase contract is complete, the device information may indicate a device type of the external electronic device. The external server 210 may transmit the obtained user information and purchase information of the external electronic device to an IoT server 220. According to various embodiments, the external server 210 may be a server which transmits a notification message related to the external electronic device.

In an embodiment, the IoT server 220 may verify a user account of the user, based on user information received from the external server 210, and may transmit the purchase information to at least one electronic device 230 associated with the user account. The IoT server 220 may be a server which manages a user account subscribed to an IoT service and manages IoT devices registered to the user account. According to various embodiments, information on the external electronic device may be retrieved based on the purchase information, and the retrieved information may be forwarded to the electronic device 230.

In an embodiment, the electronic device 230 may output the purchase information obtained from the IoT server 220. For example, the electronic device 230 may output the purchase information via a display (e.g., the display module 160 of FIG. 1) or a speaker (e.g., the sound output module 155 of FIG. 1).

In an embodiment, when the delivery of the external electronic device is complete, the external server 210 may obtain user information and delivery information of the external electronic device from a delivery company. The delivery information may include device information of the external electronic device. At a time when the delivery is complete, since the manufacturing number (e.g., the serial number) of the external electronic device to be delivered to the user may be specified, the device information may include the manufacturing number of the external electronic device. The external server 210 may transmit the obtained user information and delivery information of the external device to the IoT server 220.

In an embodiment, the IoT server 220 may verify a user account corresponding to the user information, and may transmit the delivery information to the electronic device 230 associated with the user account.

In an embodiment, the electronic device 230 may output the delivery information obtained from the IoT server 220 and provide a user interface for registering the external electronic device. For example, the registering of the external electronic device may mean storing of unique information of the external electronic device in a database managed based on the user account registered in the IoT server 220. The unique information of the external electronic device may include unique authentication information (e.g., a private key), a manufacturing number, and a serial number, which are given during the manufacturing process of the external electronic device, or at least one piece of authentication information issued from an authentication server for the registration of the external electronic device. When the external electronic device is registered with the user account, it may be configured that other users are unable to control the external electronic device unless the user shares information on the external electronic device with other users. According to various embodiments, the user interface may be output via the sound output module or the display of the electronic device 230, and may be provided to automatically perform a registration procedure without an additional input from the user when an instruction for registering the external electronic device is obtained from the user.

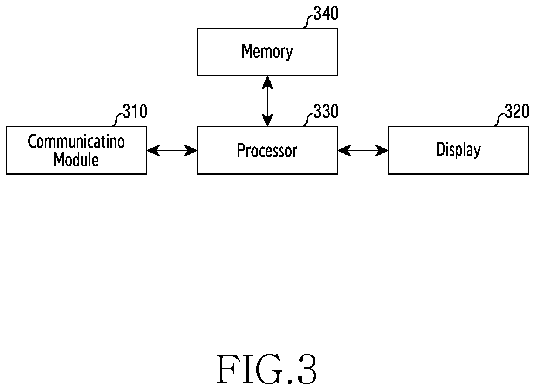

FIG. 3 is a block diagram illustrating a structure of an electronic device 300 according to an embodiment.

Referring to FIG. 3, the electronic device 300 is a device which provides a user interface for registering an external electronic device purchased by a user to an IoT server by using an account of the user, and may include a communication module 310, a display 320, a processor 330, or a memory 340. In FIG. 3, the electronic device 300 may correspond to the electronic device 101 of FIG. 1 or the electronic device 230 of FIG. 2.

In an embodiment, the communication module 310 may establish a communication connection with one or more external electronic devices (e.g., the electronic devices 102 and 104 of FIG. 1 or a server (e.g., the server 108 of FIG. 1)), and may transmit and receive a variety of data. For example, the communication module 310 may support at least one communication scheme among cellular communication, Wireless-Fidelity (Wi-Fi), Bluetooth, Near Field Communication (NFC), and Ultra-Wide Band (UWB) communication.

In an embodiment, the display 320 (e.g., the display module 160 of FIG. 1) may display the user interface for registering the external electronic device purchased by the user to the IoT server. The external electronic device may be an IoT device usable for an IoT service in a designated space such as homes or offices. According to various embodiments, the display 320 may output one or more messages received from the external server or the IoT server and/or information included in the one or more messages.

In an embodiment, the memory 340 (e.g., the memory 130 of FIG. 1) may store instructions, when executed, causing at least one processor 330 (e.g., the processor 120 of FIG. 1) to perform various operations. For example, when it is verified that the delivery of the external electronic device is complete, the at least one processor 330 may perform operations for providing a user interface for installing/registering the external electronic device.

In an embodiment, the at least one processor 330 may receive a first message including purchase information of the external electronic device from the IoT server via the communication module 310. The first message may be a message notifying that a purchase contract for the external electronic device has been established between the user and a purchase site. For example, when the purchase contract of the external electronic device is complete, an external server (e.g., a management server of a manufacturer or a management server of a delivery company) may obtain user information and purchase information of the external electronic device from the purchase site and forward the obtained purchase information to the IoT server. The IoT server may verify an IoT service related user account of the user, based on the user information, and may transmit the purchase information to the electronic device 300 associated with the user account. The user information may include user account information or a unique identification number (e.g., a resident registration number, a phone number) of the user. The purchase information may include at least one of a device type, model identification information, and delivery guidance information of the external electronic device.

In an embodiment, the at least one processor 330 may display information regarding the external electronic device on the display 320 in response to receiving the first message. According to various embodiments, the at least one processor 330 may create a virtual card corresponding to the external electronic device, based on the purchase information included in the first message. The virtual card may be used to manage the external electronic device, as a User Interface (UI) designed in a card shape. The at least one processor 330 may display the information on the external electronic device by using the created virtual card. For example, the at least one processor 330 may provide purchase/delivery state information for the external electronic device by using the virtual card. The virtual card may be displayed on one side of a background screen of the display 320 or on an execution screen of an IoT service related application.

In an embodiment, the at least one processor 330 may receive a second message including delivery information of the external electronic device from the IoT server via the communication module 310. The second message may be a message notifying that the delivery of the external electronic device is complete. For example, when the delivery of the external electronic device is complete, an external server (e.g., a management server of a manufacturer or a management server of a delivery company) may obtain user information and delivery information of the external electronic device from a person in charge of the delivery and may forward the information to the IoT server. The IoT server may transmit the delivery information to the electronic device 300 related to the user account verified based on the user information. The delivery information may include at least one of model identification information, device identification information, delivery completion indication information, and setup guide information of the external electronic device.

In an embodiment, the at least one processor 330 may display a first user interface for guiding registration of the external electronic device on the display 320, in response to receiving the second message. For example, the first user interface may be provided in the form of at least one of a pop-up message window, a web page, and an execution screen of an IoT service related application. As another example, the first user interface may be provided in association with the virtual card created in correspondence with the external electronic device. According to various embodiments, upon detecting a user input for the first user interface, the at least one processor 330 may verify whether a first application capable of interworking with the IoT server is installed. According to a result of the verification, the at least one processor 330 may directly reach a designated page of designated content or applications by using a deep-link technology. For example, if it is verified that the first application is installed as the verification result, the at least one processor 330 may enter a registration related page in an execution screen of the first application by using the deep-link and may initiate a procedure of registering the external electronic device to the IoT server. If it is verified that the first application is not installed as the verification result, the at least one processor 330 may enter an application store by using the deep-link and may provide link information for installing the first application.

In an embodiment, the at least one processor 330 may search for an unregistered device by using the communication module 310, in response to obtaining information on the unregistered device from the IoT server. For example, the IoT server may verify whether there is an unregistered device related to the user every specified time period, and may notify a result of the verification to the electronic device 300. Upon receiving information indicating the presence of the unregistered device related to the user from the IoT server, the at least one processor 330 may search for the unregistered device through a peripheral scan. The at least one processor 330 may display a second user interface for guiding the registration of the found unregistered device on the display 320. According to various embodiments, the second user interface may be provided in the form of a Voice User Interface (VUI). For example, it may be output via the speaker (e.g., the sound output module 155 of FIG. 1) provided in the electronic device 300 or a separate speaker device (e.g., an Artificial Intelligence (AI) speaker) coupled to the electronic device 300. In this case, the procedure of registering the unregistered device may be performed by a voice guidance provide via the second interface and a user's voice response for this.

In an embodiment, if a purchaser of the external electronic device is different from a real user, the at least one processor 330 may perform a procedure of transferring an ownership of the external electronic device to the real user. Upon obtaining a user input for the ownership transfer of the external electronic device, the at least one processor 330 may verify information on an ownership transfer target and the purchase information, based on the user input, and may transmit an ownership transfer request including the information on the ownership transfer target and the purchase information to the IoT server or an external server (e.g., a management server of a manufacturer). Upon receiving from the IoT server a signal indicating that the ownership transfer is complete, the at least one processor 330 may end the ownership transfer procedure by deleting the virtual card created in correspondence with the external electronic device.

According to various embodiments, the electronic device 300 of FIG. 3 may be implemented in the form of a speaker device (e.g., an AI speaker). When the electronic device 300 is the speaker device, descriptions other than the display-related part of the descriptions on the electronic device 101 of FIG. 1 or the electronic device 300 of FIG. 3 may be appropriately applied. For example, the electronic device 300 implemented in the form of the speaker device may include the communication module 310, the sound output module (not shown), the processor 330, or the memory 340.

In an embodiment, the sound output module (e.g., the sound output module 155 of FIG. 1) may output one or more messages received from the external server or the IoT server and/or information included in the one or more messages as a voice signal. According to various embodiments, the sound output module may provide a VUI for registering the external electronic device to the IoT server.

In an embodiment, the memory 340 may store instructions, when executed, causing at least one processor 330 to perform various operations. For example, when it is verified that the delivery of the external electronic device is complete, the at least one processor 330 may perform operations for providing a user interface for installing/registering the external electronic device.

In an embodiment, the at least one processor 330 may receive a message indicating delivery completion of the external electronic device from the IoT server via the communication module 310. The message may include at least one of model identification information, device identification information, delivery completion indication information, and setup guide information of the external electronic device. For example, when the delivery of the external electronic device is complete, an external server (e.g., a management server of a manufacturer or a management server of a delivery company) may obtain user information and delivery information of the external electronic device from a person in charge of the delivery and forward the information to the IoT server. The IoT server may transmit the delivery information to the electronic device 300 related to the user account verified based on the user information.

In an embodiment, the at least one processor 330 may search for the external electronic device by using the communication module 310, in response to receiving the message. For example, the at least one processor 330 may control the communication module 310 to search for the external electronic device through a peripheral scan using Bluetooth Low Energy (BLE) communication.

In an embodiment, the at least one processor 330 may output a first voice signal for guiding installation of the found external electronic device via the sound output module. The first voice signal may include a message indicating that it is ready to perform installation by searching for the external electronic device.

In an embodiment, the at least one processor 330 may perform the registration procedure for the external electronic device, upon receiving a user voice input responding to the first voice signal. When the registration of the external electronic device is complete, the at least one processor 330 may additionally output a voice guidance message indicating that the external electronic device is successfully registered and thus is usable via the sound output module.

In an embodiment, the at least one processor 330 may set a scan period to search for the unregistered device. The at least one processor 330 may perform a scan to search for the unregistered device every time set as the scan period by using the communication module 310. Upon finding the unregistered device as a result of the scan, the at least one processor 330 may output a second voice signal for guiding installation for the found unregistered device via the sound output module. The at least one processor 330 may perform the registration procedure for the unregistered device, upon receiving a user voice input responding to the second voice signal. If there is no found unregistered device as the scan result, the at least one processor 330 may output a message indicating that there is no found unregistered device via the sound output module.

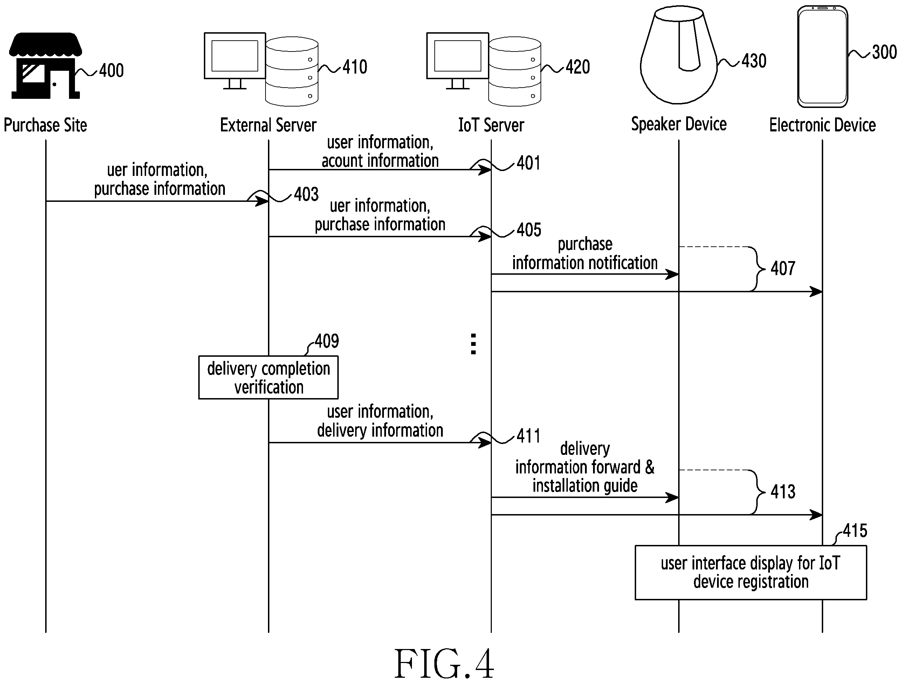

FIG. 4 illustrates a flowchart in which an electronic device provides a user interface for registering an external electronic device according to an embodiment.

Referring to FIG. 4, in operation 401, an external server 410 may share user information and account information associated with the user information with an IoT server 420. The external server 410 may be at least one of a management server of a manufacturer and a management server of a delivery company. The user information may include at least one of a user's name, address, and unique identification information (e.g., a resident registration number, a phone number). The account information may include identification information of the user registered to an IoT service related server to provide an IoT service. The IoT server 420 may manage the account information by matching the account information with the user information. According to various embodiments, the operation 401 may be performed after the account information of the user is created.

According to an embodiment, in operation 403, when a purchase contract for the external electronic device is established, a purchase site 400 may transmit user information associated with the purchase contract and purchase information of the external electronic device to the external server 410. The external electronic device may be an electronic product having a communication function to provide the IoT service.

According to an embodiment, in operation 405, the external server 410 may transmit to the IoT server 420 the user information and purchase information obtained from the purchase site 400. In an embodiment, the purchase information may include at least one of a device type, model identification information, and delivery guidance information of the external electronic device.

According to an embodiment, in operation 407, the IoT server 420 may verify account information corresponding to the user information, and may transmit a notification message including the purchase information to the electronic device 300 associated with the verified account information and/or a speaker device 430. The notification message may be output via a display (e.g., the display module 160 of FIG. 1 or the display 320 of FIG. 3), a speaker (e.g., the sound output module 155 of FIG. 1), or the speaker device 430. According to various embodiments, the notification message may include link information for installing an IoT service related application or information on the external electronic device. For example, the electronic device 300 may verify whether the IoT service related application is installed at a time of outputting the notification message, and if the IoT service related application is not installed as a result of the verification, may provide link information for installing the application on the display. As another example, the speaker device 430 may obtain information on the external electronic device, based on the notification message, and may output the information as a voice signal. The information on the external electronic device may include information on precautions before using the external electronic device, an installation/registration guide, or information on related products.

According to an embodiment, in operation 409, when the delivery of the external electronic device is complete after a specific time elapses, the external server 410 may verify that the delivery of the external electronic device is complete based on delivery information obtained from a person in charge of the delivery. The delivery information may include at least one of model identification information, device identification information (e.g., a manufacturing number or a serial number), delivery completion indication information, and setup guide information of the external electronic device.

According to an embodiment, in operation 411, the external server 410 may transmit the user information and delivery information of the external electronic device to the IoT server 420. The IoT server 420 may verify the account information corresponding to the user information and identify the electronic device 300 and/or the speaker device 430 related to the account information.

According to an embodiment, in operation 413, the IoT server 420 may forward a notification message including the delivery information to the identified electronic device 300 and/or the speaker device 430. The notification message may be output via a display (e.g., the display module 160 of FIG. 1 or the display 320 of FIG. 3), a speaker (e.g., the sound output module 155 of FIG. 1), or the speaker device 430. According to various embodiments, the notification message may include a delivery state of the external electronic device or installation guidance information. For example, the electronic device 300 may verify again whether the IoT service related application is installed at a time of outputting the notification message, and may provide the delivery state of the external electronic device or the installation guidance information via an execution screen of the IoT service related application. When it is verified that the IoT service related application is not installed, the electronic device 300 may provide link information for installing the application, and may provide the delivery state of the external electronic device or the installation guidance information after the installation of the application is complete. As another example, the speaker device 430 may output the delivery state of the external electronic device of the installation guidance information as a voice signal.

According to an embodiment, in operation 415, the electronic device 300 and/or the speaker device 430 may provide a user interface for guiding the registration of the external electronic device. For example, the electronic device 300 may provide the user interface by using at least one of a pop-up message window, a web page, and an execution screen of an IoT service related application. Upon detecting a user input for the user interface provided via the pop-up message or the web page, the electronic device 300 may verify whether the IoT service related application is installed. After verifying whether the IoT service related application is installed, the electronic device 300 may switch a screen displayed on the display by using a mobile deep-link technology. According to various embodiments, the mobile deep-link technology may mean a technology which uses a link accessible to a designated page of an application to move to the designated page. When the IoT service related application is not installed, the electronic device 300 may use the mobile deep-link technology to enter a web page (e.g., an app store) providing link information for installing the application, and may perform a procedure of registering the external electronic device to the IoT server by using account information of the user after the installation of the application is complete. When the IoT service related application is installed, the electronic device 300 may use the mobile deep-link to directly move to a designated page of the application execution screen, and may initiate the procedure of registering the external electronic device through the designated page. As another example, the speaker device 430 may provide a VUI for registering the external electronic device to the IoT server. In this case, the procedure of registering the external electronic device may be performed based on a voice interaction between the speaker device 430 and the user. When the procedure of registering the external electronic device is complete, the electronic device 300 and/or the speaker device 430 may output a message indicating that the external electronic device is successfully registered and thus is usable.

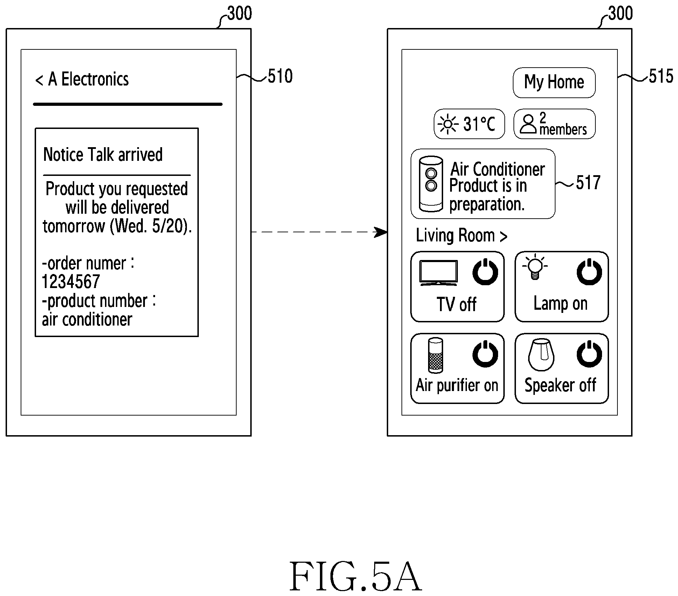

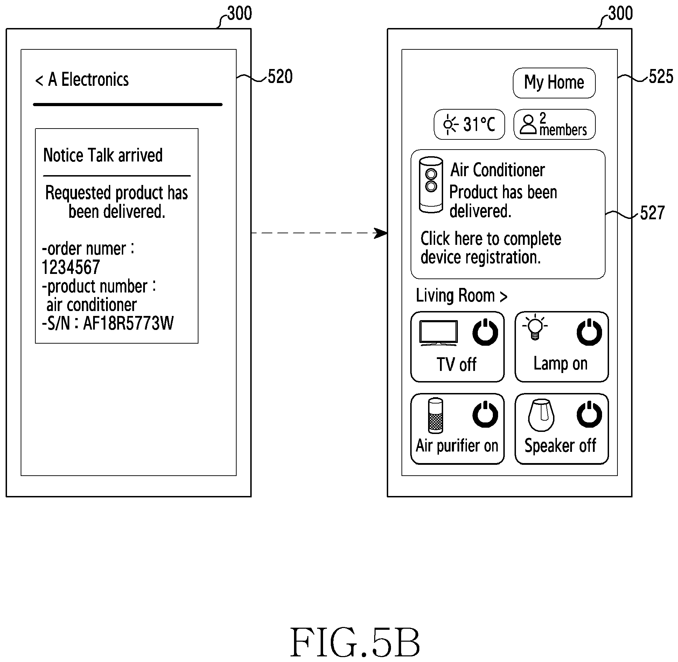

FIG. 5A and FIG. 5B illustrate a method of providing information on an external electronic device, based on purchase information or delivery information of the external electronic device, according to an embodiment.

Referring to FIG. 5A, the electronic device 300 may receive a first message 510 including purchase information of an external electronic device purchased by a user. The purchase information may include at least one of a device type, model identification information, and delivery guidance information of the external electronic device. The electronic device 300 may display information on the external electronic device, in response to receiving the first message 510. According to various embodiment, the electronic device 300 may create a virtual card 517 corresponding to the external electronic device upon receiving the first message 510, and may display the information on the external electronic device by using the created virtual care 517. The virtual card 517 may include purchase/delivery information for the external electronic device, as a user interface designed in a card shape. The electronic device 300 may display the virtual card 517 on one side of a background screen of a display (e.g., the display module 160 of FIG. 1 or the display 320 of FIG. 3) or on an execution screen 515 of an IoT service related application. According to various embodiments, the electronic device 300 may verify whether the IoT service related application is installed after receiving the first message 510, and if the IoT service related application is not installed as a result of the verification, may provide link information for installing the application on the display.

Referring to FIG. 5B, the electronic device 300 may receive a second message 520 including delivery information of the external electronic device. The delivery information may include at least one of model identification information, device identification information, delivery completion indication information, and setup guide information of the external electronic device. The electronic device 300 may provide a user interface for registering the external electronic device to the IoT service, in response to receiving the second message 520. For example, the electronic device 300 may execute the IoT service related application after receiving the second message 520, and may provide the user interface via a virtual card 527 displayed on an execution screen 525 of the application. The virtual card 527 may include a phrase for guiding device registration for the external electronic device and delivery state information changed for the external electronic device, based on the delivery information. Upon detecting a user input for the virtual card 527 by the user, the electronic device 300 may initiate a procedure of registering the external electronic device to the IoT server by using account information of the user. When the IoT service related application is not installed, the electronic device 300 may provide link information for installing the application, and may perform the procedure of registering the external electronic device to the IoT server by using account information of the user after the installation of the application is complete.

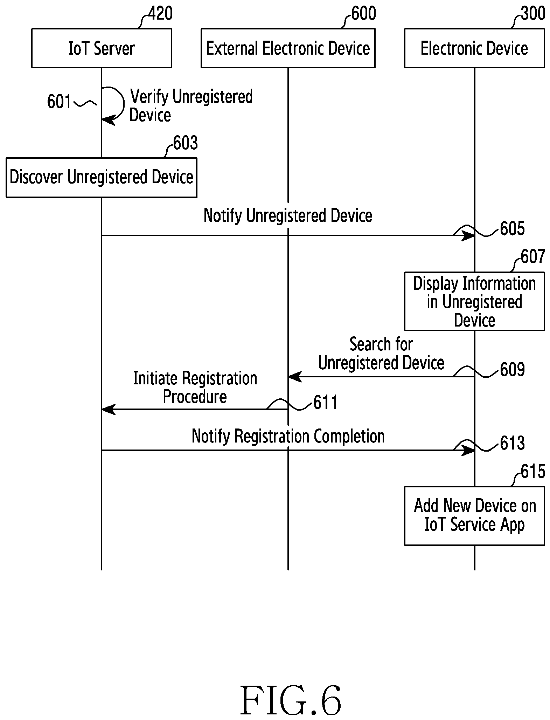

FIG. 6 illustrates a flowchart of searching for an unregistered device and registering the unregistered device to an IoT server, according to an embodiment.

Referring to FIG. 6, in operation 601, the IoT server 420 may verify whether there is an unregistered device related to a first user account. According to various embodiments, the IoT server 420 may be configured to perform the operation 601 every designated time (e.g., 24 hours or 1 week).

According to an embodiment, the IoT server 420 may discover the unregistered device related to the first user account in operation 603, and may notify information on the discovered unregistered device to the electronic device 300 in operation 605. For example, the electronic device 300 may be a main terminal registered to the first user account.

According to an embodiment, in operation 607, the electronic device 300 may display information regarding the unregistered device on a display (e.g., the display module 160 of FIG. 1 or the display 320 of FIG. 3). According to various embodiments, the electronic device 300 may output the information on the unregistered device via a speaker (e.g., the sound output module 155 of FIG. 1) as a voice signal. According to various embodiments, the electronic device 300 may create a virtual card corresponding to the unregistered device, and may provide the information on the unregistered device by using the created virtual card.

According to an embodiment, in operation 609, the electronic device may search for the unregistered device through a peripheral scan. For example, upon obtaining a user input for searching for the unregistered device after the operation 607, the electronic device 300 may perform a scan operation for searching for the unregistered device. As another example, even if there is no user input after the operation 607, the electronic device 300 may automatically perform the scan operation for searching for the unregistered device. According to an embodiment, the electronic device 300 may perform a BLE scan via a communication module (e.g., the wireless communication module 192 of FIG. 1 or the communication module 310 of FIG. 3) to search for the unregistered device. The electronic device 300 may forward a signal indicating registration for an IoT service for an external electronic device 600 found as the unregistered device. The signal may include user account information necessary for the registration of the external electronic device 600 and information on the IoT server 420.

According to an embodiment, in operation 611, the external electronic device 600 may initiate a procedure of registering the external electronic device to the IoT server 420 by using the user account information obtained based on the signal. When the procedure of registering the external electronic device 600 is complete, in operation 613, the IoT server 420 may notify the electronic device 300 that the registration procedure for the external electronic device 600 is complete.

According to an embodiment, in operation 615, the electronic device 300 may verify that the registration procedure for the external electronic device 600 is complete, and may add the external electronic device 600 as a new device on an IoT service app. For example, the electronic device 300 may display a state message indicating that the external electronic device 600 is successfully registered and thus is usable through the IoT service app. The state message may be displayed via a virtual card created in correspondence with the external electronic device 600 on an execution screen of the IoT service app.

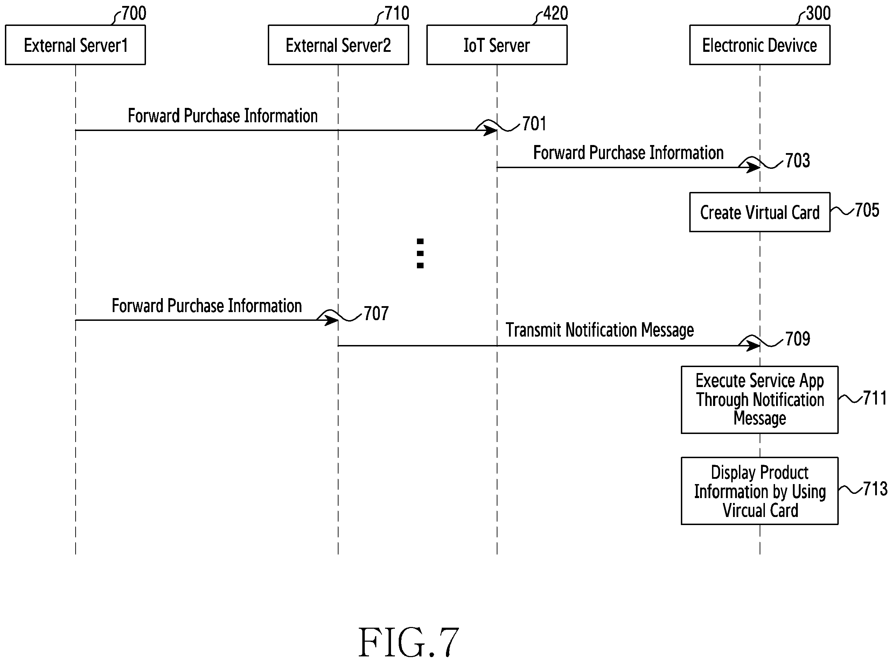

FIG. 7 illustrates a flowchart for providing information by using a virtual card created in correspondence with an external electronic device, according to an embodiment.

Referring to FIG. 7, in operation 701, an external server1 700 may transmit user information and purchase information for an external electronic device purchased by a user to the IoT server 420. The external server1 700 may be a management server of a manufacturer or a management server of a delivery company. The IoT server 420 may be a server which manages user account information for providing an IoT service. For example, when a purchase contract for the external electronic device is established, the external server1 700 may obtain the purchase information and the user information from a purchase site, and may transmit the obtained purchase information and user information to the IoT server 420. The purchase information may include at least one of a device type, model identification information, and delivery guidance information of the external electronic device. The user information may include at least one of a user's name, address, and unique identification information (e.g., a resident registration number, a phone number).

According to an embodiment, in operation 703, the IoT server 420 may verify account information corresponding to the user information, and may transmit a first message including purchase information to the electronic device 300 associated with the verified account information. For example, the electronic device 300 may be a device registered as a main terminal related to the account information.

According to an embodiment, in operation 705, the electronic device 300 may create a virtual card corresponding to the external electronic device, based on the purchase information. The virtual card may be displayed on one side of a background screen of a display (e.g., the display module 160 of FIG. 1 or the display 320 of FIG. 3) or on an execution screen of an IoT service app, as a UI designed in a card shape. The electronic device 300 may display a purchase/delivery state of the external electronic device via the created virtual card.

According to an embodiment, in operation 707, the external server1 700 may forward notification information related to the external electronic device to an external server2 710 after a specific time elapses. For example, upon verifying that the delivery of the external electronic device is complete, the external server1 700 may forward delivery information of the external electronic device to the external server2 710. The external server2 710 may be a server providing and managing a notification message for the external electronic device.

According to an embodiment, in operation 709, the external server2 710 may transmit to the electronic device 300 a message including the notification information related to the external electronic device. For example, the external server2 710 may transmit to the electronic device 300 a message including information on a delivery schedule or delivery state of the external electronic device. As another example, the external server2 710 may transmit to the electronic device 300 a message indicating that the delivery of the external electronic device is complete.

According to an embodiment, in operation 711, the electronic device 300 may verify whether an IoT service app is installed in response to receiving the notification message. If it is verified that the IoT service app is installed as a result of the verification, the electronic device 300 may automatically execute the IoT service app. If the IoT service app is not installed as the result of the verification, the electronic device 300 may provide link information for installing the IoT service app, and may execute the IoT service app after the installation of the IoT service app is complete. For example, in operation 711, the electronic device 300 may use a deep-link technology to move to a designated page of the IoT service app, or may move to a page providing link information for installing the IoT service app.

According to an embodiment, in operation 713, the electronic device 300 may display information regarding the external electronic device by using the virtual card on an execution screen of the IoT service app. For example, the electronic device 300 may display a delivery state of the external electronic device and/or information related to the external electronic device via the virtual card. The electronic device 300 may update information displayed in the virtual card whenever the notification message related to the external electronic device is received from the external server2 710. As another example, the electronic device 300 may provide a user interface for guiding the registration of the external electronic device via the virtual card. When a user input for the virtual card is detected after the delivery of the external electronic device is complete, the electronic device 300 may initiate a procedure of registering the external electronic device to the IoT server 420 by using the account information.

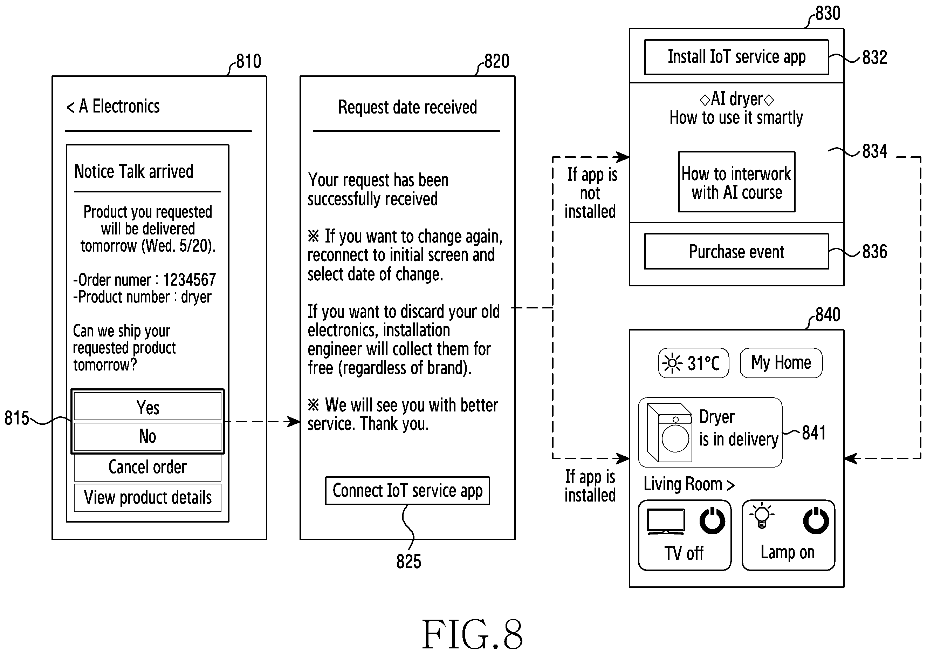

FIG. 8 illustrates a method of providing information on an external electronic device by using a virtual card when a purchase related message is received, according to an embodiment.

Referring to FIG. 8, when a purchase contract of the external electronic device is complete, the electronic device 300 may receive a message 810 including purchase information. The message 810 may include at least one of a device type, model identification information, and delivery guidance information of the external electronic device. The delivery guidance information may include a scheduled delivery date of the external electronic device and a UI 815 requesting user's verification for this. The user may request for a desired delivery date via the UI 815. For example, upon verifying a user input of 'yes' in the UI 815, the scheduled delivery date described in the message 810 may be determined as a delivery date of the external electronic device. As another example, upon verifying a user input of 'no' in the UI 815, the delivery date of the external electronic device may be determined via an additional input for a delivery date desired by the user. In addition thereto, a UI capable of canceling an order for the external electronic device or retrieving details may be provided via the message 810.

In an embodiment, upon verifying the delivery request for the external electronic device via the UI 815, the electronic device 300 may display a message 820 regarding a delivery date confirmation. According to various embodiments, the message 820 may include IoT service app connection information 825 for utilizing an IoT service of the external electronic device. Upon detecting a user input for the IoT service app connection information 825, the electronic device 300 may verify whether the IoT service app is installed. If it is verified that the IoT service app is not installed as a result of the verification, the electronic device 300 may display a user interface 830 for guiding the installation of the IoT service app. The user interface 830 may be provided in the form of a pop-up message window or a web page, and may include link information 832 for installing the IoT service app. If it is verified that the IoT service app is installed as the result of the verification, the electronic device 300 may display an execution screen 840 of the IoT service app. According to various embodiments, the electronic device 300 may use deep-link to directly move to the user interface 830 or the execution screen 840 of the IoT service app.

In an embodiment, the electronic device 300 may create one or more virtual cards 834, 836, and 841 corresponding to the external electronic device, based on the purchase information in response to receiving the message 810. The virtual card may be a UI designed in a card shape. The electronic device 300 may use the created one or more virtual cards 834, 836, and 841 to provide information on the external electronic device. For example, when the IoT service app is not installed, the electronic device 300 may provide the virtual cards 834 and 836 created for the external electronic device via the user interface 830. According to various embodiments, the virtual cards 834 and 836 may provide a method of utilizing the external electronic device or event information related to the external electronic device. As another example, when the IoT service app is installed, the electronic device 300 may provide the virtual card 841 created for the external electronic device via the execution screen 840 of the IoT service app. The virtual card 841 may provide a purchase/delivery state of the external electronic device. According to various embodiments, information displayed in the virtual card 841 may be updated based on a message received at a later time.

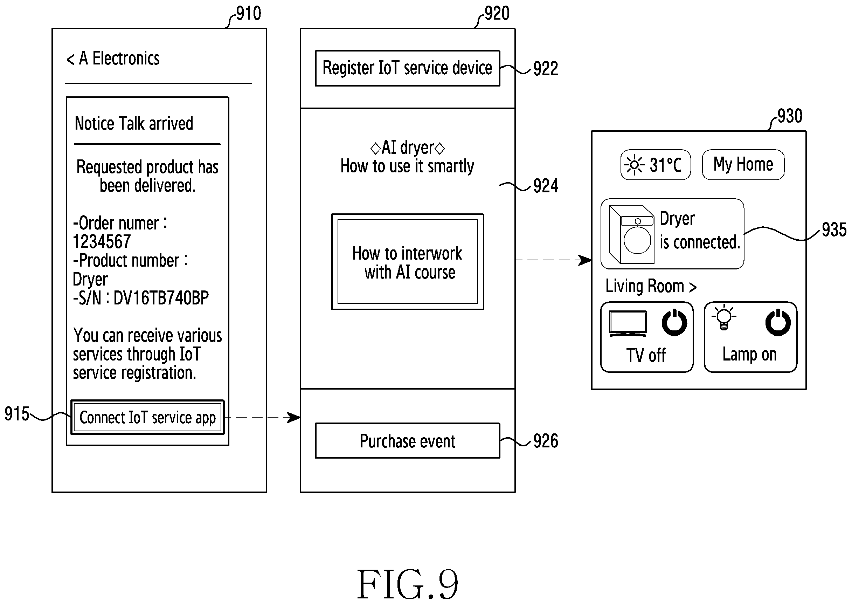

FIG. 9 illustrates a method of providing information on an external electronic device by using a virtual card when a delivery related message is received, according to an embodiment.

Referring to FIG. 9, when the delivery of the external electronic device is complete, the electronic device 300 may receive a message 910 including delivery information. The message 910 may include at least one of model identification information, device identification information, delivery completion indication information, and setup guide information of the external electronic device. The setup guide information may include IoT service app connection information 915 for registering the external electronic device. A user may execute the IoT service app by using the IoT service app connection information 915, and may request for registration of the external electronic device.

In an embodiment, upon detecting a user input for the IoT service app connection information 915, the electronic device 300 may verify whether the IoT service app is installed. If it is verified that the IoT service app is not installed as a result of the verification, the electronic device 300 may display a user interface 920 for guiding the installation of the IoT service app. The user interface 920 may be provided in the form of a pop-up message window or a web page, and may include link information 832 for installing the IoT service app. If it is verified that the IoT service app is installed as the result of the verification, the electronic device 300 may directly display an execution screen 930 of the IoT service app without having to provide the user interface 920. According to various embodiments, the electronic device 300 may use deep-link to directly move to the user interface 920 or the execution screen 930 of the IoT service app.

In an embodiment, the electronic device 300 may use one or more virtual cards 924, 926, and 935 created in correspondence with the external electronic device to provide information on the external electronic device. For example, when the IoT service app is not installed, the electronic device 300 may provide the virtual cards 924 and 926 created for the external electronic device via the user interface 920. According to various embodiments, the virtual cards 924 and 926 may provide a method of utilizing the external electronic device or event information related to the external electronic device. As another example, when the IoT service app is installed, the electronic device 300 may provide the virtual card 935 created for the external electronic device via the execution screen 930 of the IoT service app. The virtual card 935 may provide a purchase/delivery state of the external electronic device. According to various embodiments, the electronic device 300 may initiate a procedure of registering the external electronic device via the virtual card 935. Upon detecting a user input for the virtual card 935, the electronic device 300 may transmit to the IoT server a request for registering the external electronic device with a user account associated with the electronic device 300. If it is verified that the registration procedure for the external electronic device is complete, the electronic device 300 may display control information or a connection state of the external electronic device via the virtual card 935.

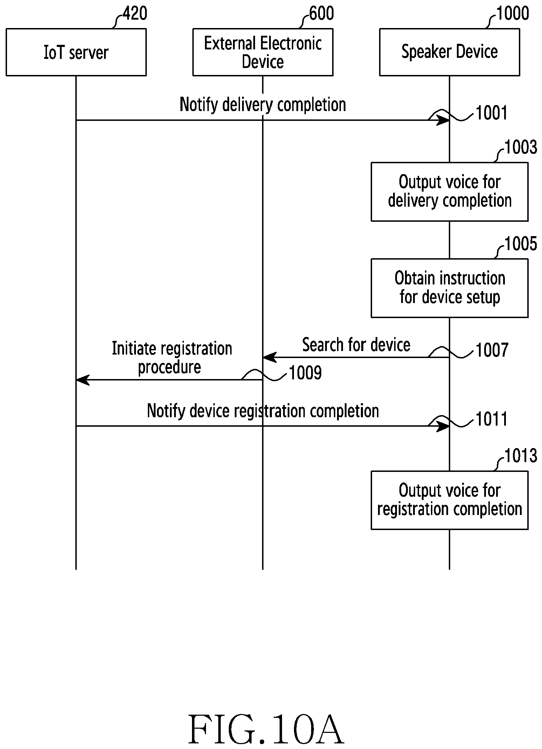

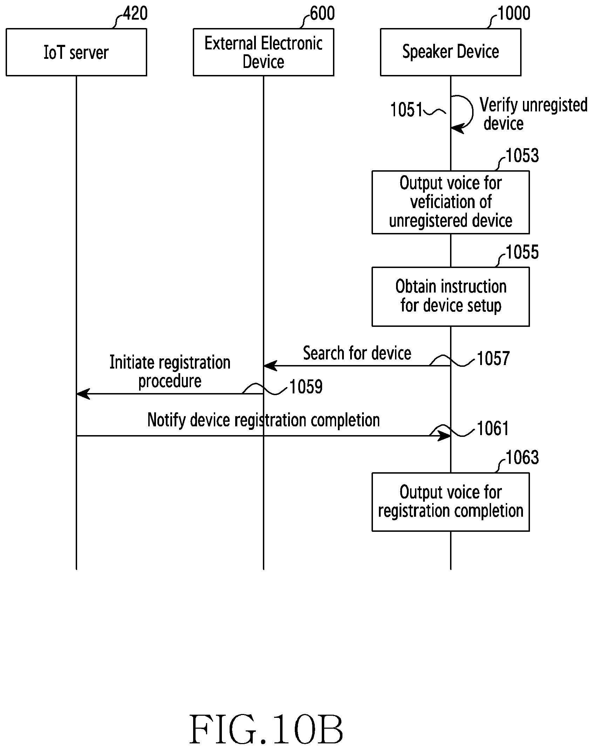

FIG. 10A and FIG. 10B illustrate a flowchart for performing a procedure of registering an external electronic device by using a speaker device 1000, according to an embodiment. In FIG. 10A and FIG. 10B, the speaker device 1000 may be an Artificial Intelligence (AI) speaker equipped with a predetermined communication function and capable of utilizing an IoT service. According to various embodiments, descriptions other than the display-related part of the descriptions on the electronic device 101 of FIG. 1 or the electronic device 300 of FIG. 3 may be appropriately applied.

FIG. 10A illustrates a process of registering the external electronic device 600 via the speaker device 1000 at a time of completing the delivery of the external electronic device 600 purchased by a user. Referring to FIG. 10A, in operation 1001, a message indicating the delivery completion of the external electronic device 600 may be received from the IoT server 420. The message may include at least one of model identification information, device identification information, delivery completion indication information, and setup guide information of the external electronic device 600. When the delivery of the external electronic device 600 is complete, the IoT server 420 may obtain delivery information and user information of the external electronic device 600 from an external server (e.g., a management server of a delivery company), and may verify a user account corresponding to the user information. The IoT server 420 may transmit a message including the delivery information to the speaker device 1000 associated with the verified user account.

According to an embodiment, in operation 1003, the speaker device 1000 may output a first voice signal regarding the delivery completion of the external electronic device 600, based on the delivery information. The first voice signal may include a message notifying that the delivery of the external electronic device 600 is complete and a message for guiding the registration of the external electronic device 600.

According to an embodiment, in operation 1005, the speaker device 1000 may obtain a user input for instructing setup of the external electronic device 600 in response to the first voice signal. The user input may be a voice input which is input from the user.

According to an embodiment, upon obtaining the user input, in operation 1007, the speaker device 1000 may search for the external electronic device 600, based on the delivery information. In operation 1007, the speaker device 1000 may control a communication module (e.g., the wireless communication module 192 of FIG. 1 or the communication module 310 of FIG. 3) to search for the external electronic device 600 through a peripheral scan using BLE communication. The speaker device 1000 may perform the procedure of registering the external electronic device 600 found through the peripheral scan to the IoT server 420.

According to an embodiment, the procedure of registering the external electronic device 600 to the IoT server 420 by using the user account may be initiated in operation 1009. According to various embodiments, the registration procedure may be automatically performed without an additional user input.

According to an embodiment, upon completion of the registration procedure, in operation 1011, the IoT server 420 may notify the speaker device 1000 that the registration procedure for the external electronic device 600 is complete.

According to an embodiment, in operation 1013, the speaker device 1000 may verity that the registration procedure for the external electronic device 600 is complete, and may output a second voice signal regarding the registration completion of the external electronic device 600. The second voice signal may include a message notifying that the registration of the external electronic device 600 is complete and a message regarding an IoT service utilization guide using the external electronic device 600.

FIG. 10B illustrates a process of registering the external electronic device 600 verified as an unregistered device via the speaker device 1000. Referring to FIG. 10B, in operation 1051, the speaker device 1000 may verify that there is an unregistered device associated with the user account. For example, the speaker device 1000 may perform a peripheral scan for searching for the unregistered device according to a pre-set time period, and may verify whether the unregistered device associated with the user account is present via the peripheral scan. The scan operation may be performed by using BLE communication. According to various embodiments, the speaker device 1000 may verify the unregistered device, based on information on the unregistered device, received from the IoT server 420.

According to an embodiment, in operation 1053, the speaker device 1000 may output a third voice signal regarding verification of the unregistered device. The third voice signal may include a message notifying that the external electronic device 600 is verified as an unregistered device and a message for guiding the registration of the external electronic device 600.

According to an embodiment, in operation 1055, the speaker device 1000 may obtain a user input for instructing setup of the external electronic device 600 in response to the third voice signal. The user input may be a voice input which is input from the user.

According to an embodiment, upon obtaining the user input, in operation 1057, the speaker device 1000 may search for the external electronic device 600 verified as the unregistered device. In operation 1057, the speaker device 1000 may control a communication module (e.g., the wireless communication module 192 of FIG. 1 or the communication module 310 of FIG. 3) to search for the external electronic device 600 through a peripheral scan using BLE communication. The speaker device 1000 may perform the procedure of registering the external electronic device 600 found through the peripheral scan to the IoT server 420.

According to an embodiment, the procedure of registering the external electronic device 600 to the IoT server 420 by using the user account may be initiated in operation 1059. According to various embodiments, the registration procedure may be automatically performed without an additional user input.

According to an embodiment, upon completion of the registration procedure, in operation 1061, the IoT server 420 may notify the speaker device 1000 that the registration procedure for the external electronic device 600 is complete.

According to an embodiment, in operation 1063, the speaker device 1000 may verity that the registration procedure for the external electronic device 600 is complete, and may output a fourth voice signal regarding the registration completion of the external electronic device 600. The fourth voice signal may include a message notifying that the registration of the external electronic device 600 is complete and a message regarding an IoT service utilization guide using the external electronic device 600.

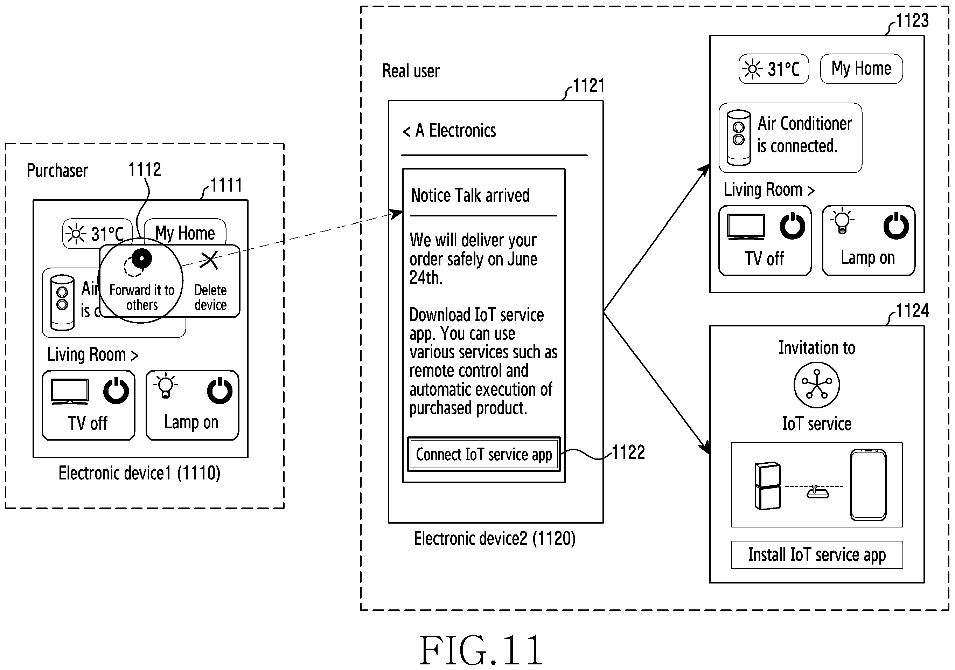

FIG. 11 illustrates a method of transferring an ownership of an external electronic device to another user, according to an embodiment.

Referring to FIG. 11, a purchaser who has established a purchase contract of the external electronic device may be different from a real user who actually uses the external electronic device. In this case, an electronic device1 1110 of the purchaser may perform a procedure of transferring an ownership for the external electronic device to an electronic device2 1120 of a real purchaser after establishing the purchase contract of the external electronic device.

In an embodiment, upon establishing the purchase contract of the external electronic device, the electronic device 1 1110 may receive a message including purchase information of the external electronic device from an external server (e.g., a management server of a manufacturer, a management server of a delivery company, or a server transmitting a notification message) or an IoT server. Upon receiving the message, the electronic device1 1110 may create a virtual card corresponding to the external electronic device, based on the purchase information, and may provide information on the external electronic device by using the virtual card. The virtual card may be displayed on one side of a background screen of a display (e.g., the display module 160 of FIG. 1 or the display 320 of FIG. 3) or on an execution screen 1111 of an IoT service app, as a UI designed in a card shape. According to various embodiments, the electronic device 1 1110 may verity whether an IoT service app capable of interworking with the IoT server is installed. If the IoT service app is installed as a result of the verification, the electronic device 1 1110 may execute the IoT service app to display the virtual card on the execution screen 1111 of the IoT service app. If the IoT service app is not installed as the result of the verification, the electronic device 1 1110 may provide link information for installing the IoT service app, and may display the virtual card via the execution screen 1111 after the installation of the IoT service app is complete.

In an embodiment, the electronic device 1 1110 may transfer the ownership of the external electronic device to the real user, based on the user input for the virtual card displayed on the execution screen 1111. For example, upon verifying that a user's touch for the virtual card is input for a time exceeding a designated time, the electronic device 1 1110 may display a popup UI providing a function for transferring the ownership of the external electronic device or deleting the device. Upon verifying the user input for a function 1112 of 'forwarding to another person' in the popup UI, the electronic device 1 1110 may transmit an ownership transfer request for the external electronic device to the IoT server or the external server.

In an embodiment, upon occurrence of the ownership transfer request for the external electronic device, the electronic device2 1120 may receive a message 1121 for the ownership transfer of the external electronic device from the external server or the IoT server. The message 1121 for the ownership transfer may include at least one of information on the ownership transfer of the external electronic device, delivery guidance information, and usage guide information. The usage guide information may include IoT service app connection information 1122 for registering the external electronic device.

In an embodiment, upon receiving the message 1121, the electronic device2 1120 may create a virtual card corresponding to the external electronic device, and may provide information on the external electronic device by using the virtual card. The virtual card may be displayed on one side of a background screen of a display (e.g., the display module 160 of FIG. 1 or the display 320 of FIG. 3) or on an execution screen 1111 of an IoT service app. According to various embodiments, when the electronic device2 1120 creates the virtual card corresponding to the external electronic device upon transferring the ownership transfer of the external electronic device, the virtual card of the external electronic device, created in the electronic device 1 1110, may be deleted.

In an embodiment, upon detecting a user input for the IoT service app connection information 1122, the electronic device2 1120 may verify whether the IoT service app is installed. According to various embodiments, after verifying whether the IoT service app is installed, the electronic device2 1120 may switch a screen displayed on the display by using a mobile deep-link technology. If it is verified that the IoT service app is installed as a result of the verification, the electronic device2 1120 may enter a designated page 1123 of an execution screen of the IoT service, and may add a virtual card created for the external electronic device on the designated page 1123 of the execution screen. If it is verified that the IoT service app is not installed as the result of the verification, the electronic devicve2 1120 may display a user interface 1124 for guiding the installation of the IoT service. The user interface 1124 may be provided in the form of a popup message window and a web page, and may include link information for installing the IoT service app. The electronic device2 1120 may display the virtual card created for the external electronic device via the execution screen 1123 after the installation of the IoT service app is complete.

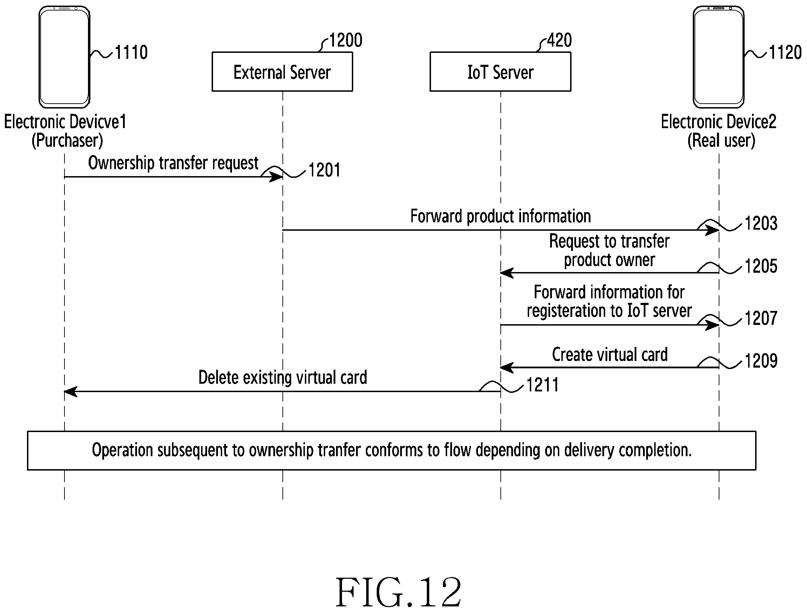

FIG. 12 illustrates a flowchart for transferring an ownership of an external electronic device to an electronic device of another user, according to an embodiment.

Referring to FIG. 12, in operation 1201, the electronic device 1 1110 associated with a purchaser may transmit an ownership transfer request of the external electronic device to an external server 1200 (e.g., a management server of a manufacturer). The ownership transfer request may include purchase information of the external electronic device and information on an ownership transfer target (e.g., information on the electronic device2 1120 associated with a real user).

According to an embodiment, in operation 1203, the external server 1200 may transmit the information on the ownership transfer of the external electronic device to the electronic device2 1120 of a real user, i.e., an ownership transfer target. The information on the ownership transfer may include the purchase information of the external electronic device and the information required for the ownership transfer (e.g., purchaser information or IoT service usage guide information).

According to an embodiment, in response to receiving the information on the ownership transfer, in operation 1205, a product owner transfer request of the external electronic device may be transmitted to the IoT server 420.

According to an embodiment, in operation 1207, the electronic device2 1120 may obtain information for loT server registration of the external electronic device from the IoT server 420 in response to the ownership transfer request. The information for IoT server registration may include a user interface for registering the external electronic device with a user account of a real owner.

According to an embodiment, in operation 1209, the electronic device2 1120 may create a virtual card corresponding to the external electronic device. The virtual card may be used to display information on the external electronic device or to provide a function for registering/controlling/managing the external electronic device, as a UI designed in a card shape. According to various embodiments, the virtual card may be displayed on one side of a background screen of a display (e.g., the display module 160 of FIG. 1 or the display 320 of FIG. 3) or on an execution screen of an IoT service app. For example, upon detecting a user input for the user interface, the electronic device2 1120 may verity whether the IoT service app capable of interworking with the IoT server is installed. If the IoT service app is installed as a result of the verification, the electronic device2 1120 may use deep-link to move to a specific page of the execution screen of the IoT service app, and may display the virtual card on the specific page of the execution screen of the IoT service app. If the IoT service app is not installed as the result of the verification, the electronic device2 1120 may use the deep-link to move to a web page providing link information for installing the IoT service app, and may display the virtual card by executing the IoT service app after the installation of the IoT service app is complete through the web page.

According to an embodiment, in operation 1211, the IoT server 420 may verity that the virtual card for the external electronic device is created in the electronic device2 1120 via the IoT service app, and may transmit to the electronic device1 1110 a message instructing the external electronic device to delete the existing virtual card stored in the electronic device 1 1110. Upon deleting the existing virtual card from the electronic device 1 1110, an ownership transfer procedure for the external electronic device is complete, and a delivery procedure (e.g., the operations 409 to 415 of FIG. 4) of the external electronic device may be performed on the electronic device2 1120.

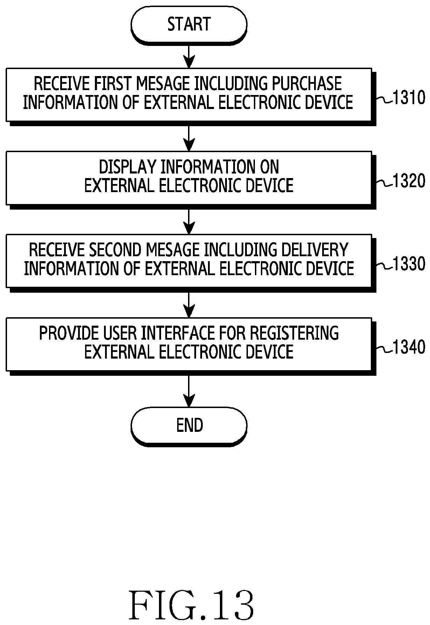

FIG. 13 is a flowchart illustrating a method of operating an electronic device according to an embodiment. According to an embodiment, the electronic device 300 is a device which provides a user interface for registering an external electronic device purchased by a user to an IoT server by using an account of the user, and may correspond to the electronic device 101 of FIG. 1 or the electronic device 230 of FIG. 2. Operations of FIG. 13 may be performed by at least one processor (e.g., the processor 120 of FIG. 1 or at least one processor 330 of FIG. 3) included in the electronic device 300.

Referring to FIG. 13, in operation 1310, the electronic device 300 may receive a first message including purchase information of the external electronic device from the IoT server. The first message may be a message notifying that a purchase contract for the external electronic device has been established between the user and a purchase site. For example, when the purchase contract of the external electronic device is complete, an external server (e.g., a management server of a manufacturer or a management server of a delivery company) may obtain user information and purchase information of the external electronic device from the purchase site and deliver the obtained purchase information to the IoT server. The IoT server may verify an IoT service related user account of the user, based on the user information, and may transmit the purchase information to the electronic device 300 associated with the user account. The user information may include user account information or a unique identification number (e.g., a resident registration number, a phone number) of the user. The purchase information may include at least one of a device type, model identification information, and delivery guidance information of the external electronic device.

According to an embodiment, in operation 1320, the electronic device 300 may display information regarding the external electronic device on a display (e.g., the display module 160 of FIG. 1) in response to receiving the first message. According to various embodiments, the electronic device 300 may create a virtual card corresponding to the external electronic device, based on the purchase information included in the first message. The virtual card may be used to manage the external electronic device, as a UI designed in a card shape. For example, the electronic device 300 may provide purchase/delivery state information for the external electronic device by using the virtual card. The virtual card may be displayed on one side of a background screen of the display 320 or on an execution screen of an IoT service related application.

According to an embodiment, in operation 1330, the electronic device 300 may receive a second message including delivery information of the external electronic device from the IoT server. The second message may be a message notifying that the delivery of the external electronic device is complete. For example, when the delivery of the external electronic device is complete, an external server (e.g., a management server of a manufacturer or a management server of a delivery company) may obtain user information and delivery information of the external electronic device from a person in charge of the delivery, and may forward the information to the IoT server. The IoT server may transmit the delivery information to the electronic device 300 related to the user account verified based on the user information. The delivery information may include at least one of model identification information, device identification information, delivery completion indication information, and setup guide information of the external electronic device.

According to an embodiment, in operation 1340, the electronic device 300 may provide a first user interface for guiding registration of the external electronic device in response to receiving the second message. For example, the first user interface may be provided in the form of at least one of a pop-up message window, a web page, and an execution screen of an IoT service related application. As another example, the first user interface may be provided in association with the virtual card created in correspondence with the external electronic device. According to various embodiments, upon detecting a user input for the first user interface, the electronic device 300 may verify whether a first application capable of interworking with the IoT server is installed. If it is identified that the first application is installed as the verification result, the electronic device 300 may enter a registration related page in an execution screen of the first application by using the deep-link and may initiate a procedure of registering the external electronic device to the IoT server. If it is identified that the first application is not installed as the verification result, the electronic device 300 may enter a web page which provides link information for installing the first application by using the deep-link and may initiate the procedure of registering the external electronic device by executing the first application after the installation of the first application is complete.

According to various embodiments, the electronic device 300 may search for an unregistered device through a peripheral scan. For example, upon obtaining information on the unregistered device from the IoT server, the electronic device 300 may perform a BLE scan by using a communication module (e.g., the wireless communication module 192 of FIG. 1 or the communication module 310 of FIG. 3) to search for the unregistered device. The IoT server may verify whether there is an unregistered device related to the user every specified time period, and may notify a result of the verification to the electronic device 300. The electronic device 300 may provide a second user interface for guiding the registration of the found unregistered device. According to various embodiments, the second user interface may be displayed on the display 320 or may be provided in the form of a VUI.

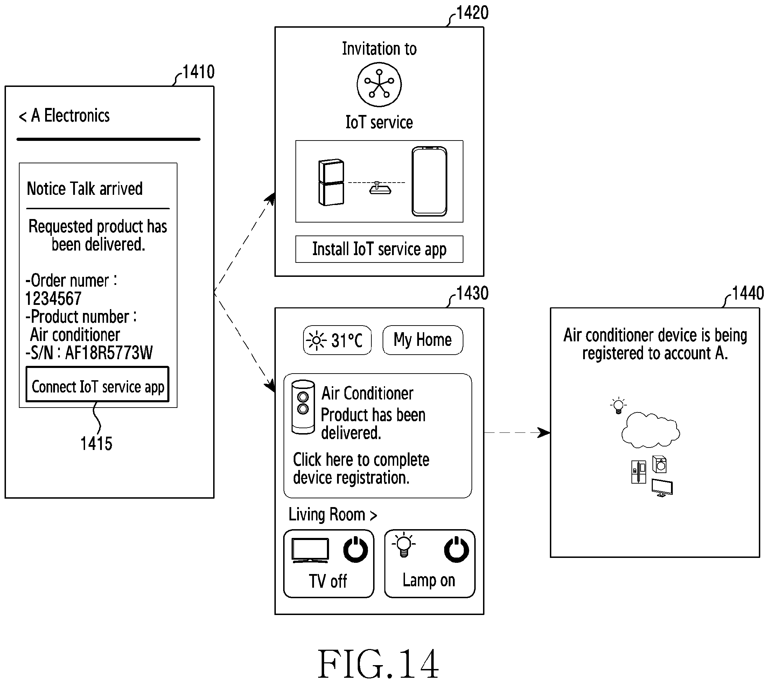

FIG. 14 illustrates a method of guiding automatic registration of an external electronic device depending on whether an IoT service app is installed, according to an embodiment.

Referring to FIG. 14, the electronic device 300 may receive a message 1410 for delivery completion of the external electronic device. The message 1410 may include at least one of model identification information, device identification information, delivery completion indication information, and setup guide information of the external electronic device. The setup guide information may include IoT service app connection information 1415 for registering the external electronic device.

In an embodiment, upon detecting a user input for the IoT service app connection information 1415, the electronic device 300 may verify whether the IoT service app is installed. If it is verified that the IoT service app is not installed as a result of the verification, the electronic device 300 may display a user interface 1420 for guiding the installation of the IoT service app. The user interface 1420 may be provided in the form of a pop-up message window or a web page, and may include link information for installing the IoT service app. When the installation of the IoT service app is complete, the electronic device 300 may display an execution screen 1430 of the IoT service app. If it is verified that the IoT service app is installed as the result of the verification, the electronic device 300 may directly display the execution screen 1430 of the IoT service app without having to provide the user interface 1420.

In an embodiment, the electronic device 300 may display the information on the external electronic device via a virtual card 1435 displayed on the execution screen 1430 of the IoT service app or may initiate a procedure of registering the external electronic device. For example, upon verifying a user input for the virtual card 1435, the electronic device 300 may transmit to the IoT server a request for registering the external electronic device with a user account of the electronic device 300. The electronic device 300 may display a guidance message 1440 regarding device registration while the registration procedure for the external electronic device is performed.

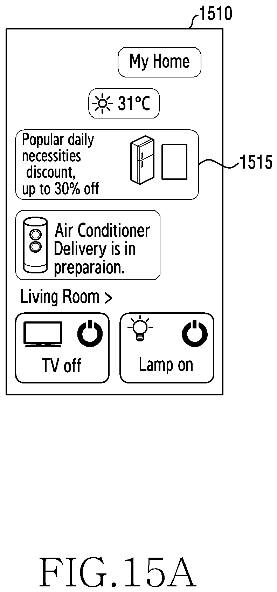

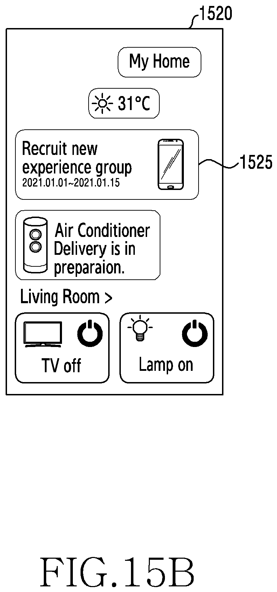

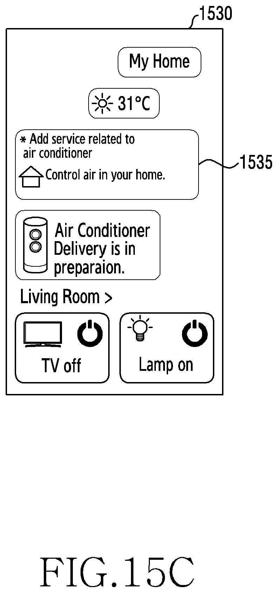

FIG. 15A, FIG. 15B, and FIG. 15C illustrate a method of providing information related to an external electronic device by an electronic device, according to an embodiment.

According to various embodiments, the electronic device 300 may provide a variety of information related to the external electronic device by using one or more virtual cards 1515, 1525, and 1535 created in correspondence with the external electronic device. For example, the virtual cards 1515, 1525, and 1535 may be configured to provide promotional information, event information, or usage guide information related to the external electronic device, and may be displayed on an execution screen of an application related to an IoT service.

Referring to FIG. 15A, the electronic device 300 may provide recommendation/advertisement information of products related to the external electronic device by using the virtual card 1515 of an execution screen 1510 of the application. For example, when the external electronic device is an air conditioner, the electronic device 300 may retrieve information on consumables or accessory products related to the air conditioner and provide the information via the virtual card 1515.

Referring to FIG. 15B, the electronic device 300 may provide event information related to the external electronic device by using the virtual card 1525 of the execution screen 1520 of the application. For example, the electronic device 300 may retrieve whether there is an ongoing event related to the external electronic device and provide a result thereof via the virtual card 1525.

Referring to FIG. 15C, the electronic device 300 may provide usage guide information of the external electronic device by using the virtual card 1535 of the execution screen 1530 of the application. For example, the electronic device 300 may retrieve information on an IoT service providable via the external electronic device or information related to an available function and provide the information via the virtual card 1535.

An electronic device (e.g., the electronic device 300) according to an embodiment may include a communication module (e.g., the communication module 310), a display (e.g., the display 320), at least one processor (e.g., the processor 220) operatively coupled to the communication module and the display, and a memory (e.g., the memory 340) operatively coupled to the at least one processor. The memory may store instructions, when executed, causing the at least one processor to receive a first message including purchase information of an external electronic device from an Internet of Things (IoT) server (e.g., the IoT server 420) via the communication module, display information regarding the external electronic device on the display in response to receiving the first message, receive a second message including delivery information of the external electronic device from the IoT server via the communication module, and display a first user interface for guiding registration of the external electronic device on the display, in response to receiving the second message.

In an embodiment, the instructions may cause the at least one processor to verify whether a first application capable of interworking with the IoT server is installed upon detecting a user input for the first user interface, and execute the first application to perform a registration procedure for the external electronic device upon verifying that the first application is installed as a result of the verification.

In an embodiment, the instructions may cause the at least one processor to display link information for installing the first application on the display upon verifying that the first application is not installed as the verification result.

In an embodiment, the purchase information may include at least one of a device type, model identification information, and delivery guidance information of the external electronic device.

In an embodiment, the delivery information may include at least one of model identification information, device identification information, delivery completion indication information, and setup guide information of the external electronic device.

In an embodiment, the instructions may cause the at least one processor to search for an unregistered device by using the communication module in response to obtaining information on the unregistered device from the IoT device, and provide a second interface for guiding registration for the found unregistered device.

In an embodiment, the instructions may cause the at least one processor to provide the second interface via a speaker device (e.g., the speaker device 430) coupled to the display or the electronic device.

In an embodiment, the instructions may cause the at least one processor to create a virtual card corresponding to the external electronic device, based on the purchase information, in response to receiving the first message, and display information on the external electronic device by using the virtual card.

In an embodiment, the instructions may cause the at least one processor to transmit to the IoT server or an external server (e.g., the external server 1200) an ownership transfer request including information on a target for ownership transfer and the purchase information upon obtaining a user input for the ownership transfer of the external electronic device, and delete the virtual card upon receiving a signal indicating completion of the ownership transfer from the IoT server.

An electronic device (e.g., the speaker device 1000) according to another embodiment may include a communication module, a sound output module, at least one processor operatively coupled to the communication module and the sound output module; and a memory operatively coupled to the at least one processor. The memory may store instructions, when executed, causing the at least one processor to receive a message indicating delivery completion of an external electronic device (e.g., the external electronic device 600) from an IoT server (e.g., the IoT server 420) via the communication module, search for the external electronic device in response to receiving the message, output a first voice signal for guiding installation of the found external electronic device via the sound output module, and perform a registration procedure for the external electronic device, upon receiving a user input responding to the first voice signal.

In an embodiment, the instructions may cause the at least one processor to perform a scan to search for an unregistered device every specified time via the communication module, output a second voice signal for guiding installation for the found unregistered device via the sound output module, upon finding the unregistered device as a result of the scan, and perform the registration procedure for the unregistered device, upon receiving a user input responding to the second voice signal.

A method of operating an electronic device (e.g., the electronic device 300) according to another embodiment may include receiving a first message including purchase information of an external electronic device from an IoT server (e.g., the IoT server 420), displaying information regarding the external electronic device on a display (e.g., the display 320) in response to receiving the first message, receiving a second message including delivery information of the external electronic device from the IoT server, and displaying a first user interface for guiding registration of the external electronic device on the display, in response to receiving the second message.

In an embodiment, the method may further include verifying whether a first application capable of interworking with the IoT server is installed upon detecting a user input for the first user interface, and executing the first application to perform a registration procedure for the external electronic device upon verifying that the first application is installed as a result of the verification.

In an embodiment, the method may further include displaying link information for installing the first application on the display upon verifying that the first application is not installed as the verification result.

In an embodiment, the purchase information may include at least one of a device type, model identification information, and delivery guidance information of the external electronic device.

In an embodiment, the delivery information may include at least one of model identification information, device identification information, delivery completion indication information, and setup guide information of the external electronic device.

In an embodiment, the method may further include obtaining information on an unregistered device from the IoT server, searching for the unregistered device, and providing a second interface for guiding registration for the found unregistered device.

In an embodiment, the providing of the second user interface may include providing the second interface via a speaker device (e.g., the speaker device 430) coupled to the display or the electronic device.

Ian an embodiment, the displaying of the information regarding the external electronic device on the display may include creating a virtual card corresponding to the external electronic device, based on the purchase information in response to receiving the first message, and displaying information on the external electronic device by using the virtual card.

In an embodiment, the method may further include transmitting to the IoT server or an external server (e.g., the external server 1200) an ownership transfer request including information on a target for ownership transfer and the purchase information upon obtaining a user input for the ownership transfer of the external electronic device, and deleting the virtual card upon receiving a signal indicating completion of the ownership transfer from the IoT server.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a communication module;
a display;
at least one processor operatively coupled to the communication module and the display; and
a memory operatively coupled to the at least one processor,
wherein the memory stores instructions, when executed, causing the at least one processor to:
receive a first message including purchase information of an external electronic device from an Internet of Things (IoT) server via the communication module;
display information regarding the external electronic device on the display, in response to receiving the first message;
receive a second message including delivery information of the external electronic device from the IoT server via the communication module; and
display a first user interface for guiding registration of the external electronic device on the display, in response to receiving the second message.

2. The electronic device of claim 1, wherein the instructions cause the at least one processor to:
verify whether a first application capable of interworking with the IoT server is installed, upon detecting a user input for the first user interface; and
execute the first application to perform a registration procedure for the external electronic device, upon verifying that the first application is installed as a result of the verification.

3. The electronic device of claim 2, wherein the instructions cause the at least one processor to display link information for installing the first application on the display, upon verifying that the first application is not installed as the verification result.

4. The electronic device of claim 1,
wherein the purchase information includes at least one of a device type, model identification information, and delivery guide information of the external electronic device, and
wherein the delivery information includes at least one of model identification information, device identification information, delivery completion indication information, and setup guide information of the external electronic device.

5. The electronic device of claim 1, wherein the instructions cause the at least one processor to:
search for an unregistered device by using the communication module, in response to obtaining information on the unregistered device from the IoT device; and
provide a second interface for guiding registration for the found unregistered device via a speaker device coupled to the display or the electronic device.

6. The electronic device of claim 1, wherein the instructions cause the at least one processor to:
create a virtual card corresponding to the external electronic device, based on the purchase information, in response to receiving the first message; and
display information on the external electronic device by using the virtual card.

7. The electronic device of claim 6, wherein the instructions cause the at least one processor to:
transmit to the IoT server or an external server an ownership transfer request including information on a target for ownership transfer and the purchase information, upon obtaining a user input for the ownership transfer of the external electronic device; and
delete the virtual card, upon receiving a signal indicating completion of the ownership transfer from the IoT server.

8. An electronic device comprising:
a communication module;
a sound output module;
at least one processor operatively coupled to the communication module and the sound output module; and
a memory operatively coupled to the at least one processor,
wherein the memory stores instructions, when executed, causing the at least one processor to:
receive a message indicating delivery completion of an external electronic device from an IoT server via the communication module;
search for the external electronic device, in response to receiving the message;
output a first voice signal for guiding installation of the found external electronic device via the sound output module; and
perform a registration procedure for the external electronic device, upon receiving a user input responding to the first voice signal.

9. The electronic device of claim 8, wherein the instructions cause the at least one processor to:
perform a scan to search for an unregistered device every specified time via the communication module;
output a second voice signal for guiding installation for the found unregistered device via the sound output module, upon finding the unregistered device as a result of the scan; and
perform the registration procedure for the unregistered device, upon receiving a user input responding to the second voice signal.

10. A method of operating an electronic device, comprising:
receiving a first message including purchase information of an external electronic device from an IoT server;
displaying information regarding the external electronic device on a display, in response to receiving the first message;
receiving a second message including delivery information of the external electronic device from the IoT server; and
displaying a first user interface for guiding registration of the external electronic device on the display, in response to receiving the second message.

11. The method of claim 10, further comprising:
verifying whether a first application capable of interworking with the IoT server is installed, upon detecting a user input for the first user interface;
executing the first application to perform a registration procedure for the external electronic device, upon verifying that the first application is installed as a result of the verification; and
displaying link information for installing the first application on the display, upon verifying that the first application is not installed as the verification result.

12. The method of claim 10,
wherein the purchase information includes at least one of a device type, model identification information, and delivery guide information of the external electronic device, and
wherein the delivery information includes at least one of model identification information, device identification information, delivery completion indication information, and setup guide information of the external electronic device.

13. The method of claim 10, further comprising:
obtaining information on an unregistered device from the IoT server;
searching for the unregistered device; and
providing a second interface for guiding registration for the found unregistered device, via a speaker device coupled to the display or the electronic device.

14. The method of claim 10, wherein the displaying of the information regarding the external electronic device on the display comprises:
creating a virtual card corresponding to the external electronic device, based on the purchase information, in response to receiving the first message; and
displaying information on the external electronic device by using the virtual card.

15. The method of claim 14, further comprising:
transmitting to the IoT server or an external server an ownership transfer request including information on a target for ownership transfer and the purchase information, upon obtaining a user input for the ownership transfer of the external electronic device; and
deleting the virtual card, upon receiving a signal indicating completion of the ownership transfer from the IoT server.
